# EUROPÄISCHE PATENTSCHRIFT

(11) **EP 1 913 282 B1**
(45) Veröffentlichungstag und Bekanntmachung des Hinweises auf die Patenterteilung: **31.12.2008**
(21) Anmeldenummer: 06753741.5
(22) Anmeldetag: 19.05.2006
(51) Int. Cl.: F16D 65/27

(54) **BREMSVORRICHTUNG FÜR EINEN ELEKTROMOTOR**
BRAKE APPARATUS FOR AN ELECTRIC MOTOR
DISPOSITIF DE FREINAGE POUR UN MOTEUR ELECTRIQUE

(30) Priorität: 28.07.2005 CH 12622005
(43) Veröffentlichungstag der Anmeldung: 23.04.2008
(73) Patentinhaber: Etel S.A., 2112 Môtiers (CH)
(72) Erfinder: MOREL, Jean-Pierre, F-25300 Les Fourgs (FR)
(74) Vertreter: Pleyer, Hans Anno
(86) Internationale Anmeldenummer: PCT/EP2006/004763
(87) Internationale Veröffentlichungsnummer: WO 2007/012359

(56) Entgegenhaltungen:
- EP-A- 0 936 366
- WO-A-20/05015047
- DE-A1- 10 022 759

## Beschreibung

Die vorliegende Erfindung betrifft eine Bremsvorrichtung für einen Elektromotor wie z.B aus EP-A-0 936 366 bekannt, insbesondere einen Linearmotor, des Typs mit zwei Bremsklötzen, die mit einer Bremsschiene zusammenwirken, die zwischen diese zwei Bremsklötze eingefügt ist. Das Bremsen wird durch seitliches Drücken von Bremsscheiben, die mit den zwei Bremsklötzen verbunden sind, gegen eine Bremsschiene oder Bremsscheibe erhalten. Um die Bremsvorrichtung zu betätigen, d. h. um die Bremse anzuziehen oder zu lösen, umfasst die Bremsvorrichtung Entfernungsmittel, die mit den zwei Bremsklötzen verbunden sind und die es ermöglichen, den Abstand zwischen diesen zwei Bremsklötzen zu ändern, um die Bremsvorrichtung zu aktivieren oder deaktivieren.

Die Bremsvorrichtungen mit zwei Bremsklötzen, die mit einer Bremsschiene oder in äquivalenter Weise mit einer Bremsplatte oder Bremsscheibe zusammenwirken, sind dem Fachmann gut bekannt. Für zahlreiche Anwendungen ist es erforderlich, beim Anhalten eine genaue Position des beweglichen Teils eines Elektromotors aufrechtzuerhalten; und zwar nicht nur in der Längsrichtung der Bremsschiene, sondern auch in den Querrichtungen, d. h. entlang der drei Hauptachsen.

Die meisten herkömmlichen Bremsvorrichtungen des Typs mit Bremsklötzen weisen ein Hauptproblem der Veränderung der Position des beweglichen Teils bei der Betätigung der Bremsvorrichtung auf. Die Mittel zum Entfernen der zwei Bremsklötze erzeugen nämlich Verformungen, insbesondere an den materiellen Mitteln, die diese zwei Bremsklötze verbinden, wobei diese Verformungen folglich auf den Träger der Baugruppe, die durch die zwei Bremsklötze und die Entfernungsmittel gebildet ist, an welchem diese Baugruppe starr befestigt ist, wirken. Folglich hat die Veränderung der mechanischen Spannungen in der Bremsvorrichtung bei ihrer Betätigung die Konsequenz, den beweglichen Teil des Motors, der mit dem Träger fest verbunden ist, sich bewegen zu lassen, insbesondere beim Anziehen der Bremse, um den beweglichen Teil in einer gegebenen Position zu halten. In dem Fall, in dem die zwei Bremsklötze durch ein Verbindungselement starr verbunden sind, das eine bestimmte Biegung erfahren kann, aber bei der Ausübung einer Bremskraft gegen die Seitenwände der Bremsschiene die erforderliche Steifigkeit aufweist, erzeugt die Veränderung des Abstands der zwei Bremsklötze eine Verformung dieses Verbindungselements entlang der Z-Achse (in der Mittelebene zu den zwei Bremsklötzen und senkrecht zur Längsrichtung der Bremsschiene gelegen). Diese Verformung des Verbindungselements erzeugt eine Positionsänderung entlang der Z-Achse des Trägers, an dem das Verbindungselement im Allgemeinen starr befestigt ist.

Ein weiteres Problem, das bei derartigen Bremsvorrichtungen angetroffen wird, ergibt sich aus der Tatsache, dass die Bremsschiene oder das Führungssystem des beweglichen Teils (das durch die Bremsschiene gebildet sein kann) nicht immer vollkommen geradlinig ist. In einem derartigen Fall ist es möglich, dass die Bremsscheiben, die an den Bremsklötzen montiert sind, an der Schiene reiben. Die starre Bauart der klassischen Bremsvorrichtungen erzeugt eine signifikante Bremswirkung bei derartigen Reibungen, was für das dynamische Verhalten des Elektromotors ungünstig ist.

Die vorliegende Erfindung hat das Ziel, die vorstehend erwähnten Nachteile zu beseitigen, indem sie eine Bremsvorrichtung des Typs mit Bremsklötzen liefert, die mit einer Bremsschiene oder Bremsscheibe zusammenwirken, und die es ermöglicht, die Position des beweglichen Teils entlang der drei Hauptachsen bei der Betätigung dieser Bremsvorrichtung genau aufrechtzuerhalten.

Dazu betrifft die Erfindung eine Bremsvorrichtung der vorstehend beschriebenen Art, die dadurch gekennzeichnet ist, dass die Baugruppe, die aus den zwei Bremsklötzen und den Mitteln für deren Entfernung gebildet ist, an einem Träger dieser Bremsvorrichtung durch Befestigungsmittel befestigt ist, die relativ zu diesem Träger entlang einer zur Bremsschiene querliegenden Richtung elastisch verformbar sind.

Durch die Tatsache, dass die Bremsklötze, die mit den Entfernungsmitteln verbunden sind, am Träger der Bremsvorrichtung mit Hilfe elastisch verformbarer Mittel montiert sind, werden die Verformungen, die von der Baugruppe erfahren werden, die die Bremsklötze umfasst, nicht mehr auf den Träger übertragen, so dass das bewegliche Element bei der Betätigung der Bremsvorrichtung in einer stabilen Position bleibt. Außerdem ermöglichen es die elastisch verformbaren Befestigungsmittel, das parasitäre Bremsen auf Grund der Reibung der Bremsscheiben an der Bremsschiene stark zu verringern, wenn diese oder die Führungsmittel nicht vollkommen geradlinig sind. Die zwei Bremsklötze und das Verbindungselement von diesen können nämlich unter dem Einfluss einer relativ kleinen Kraft eine Querverschiebung erfahren, so dass der Druck, der auf die eine oder die andere der Scheiben, die mit den Bremsklötzen verbunden sind, ausgeübt wird, wenn die Bremse gelöst wird, relativ gering bleibt.

In der bevorzugten Ausführungsform der Erfindung, die nachstehend beschrieben wird, sind die Entfernungsmittel der Bremsklötze aus einem piezoelektrischen Element gebildet, das zwischen diesen zwei Bremsklötzen angeordnet ist. In der bevorzugten Ausführungsform umfassen die elastisch verformbaren Befestigungsmittel mindestens zwei Platten, die eine gewisse Elastizität entlang einer zur Bremsschiene querliegenden Richtung, aber eine gute Steifigkeit entlang der zu dieser Bremsschiene parallelen Richtung aufweisen. Durch dieses letztere Merkmal wird eine genaue und stabile Positionierung entlang der Verschiebungsrichtung des beweglichen Teils des Elektromotors garantiert und ein stabiles Aufrechterhalten der gegebenen Position dieses beweglichen Teils beim Anhalten bei der Aktivierung der Bremsvorrichtung zum Anziehen der Bremse wird sichergestellt. Die elastischen Platten sind nämlich so bemessen, dass sie die mechanischen Spannungen und Verformungen der zwei Bremsklötze und der materiellen Elemente, die diese verbinden, absorbieren.

Weitere Merkmale und Vorteile der erfindungsgemäßen Bremsvorrichtung werden in der folgenden Beschreibung genauer beschrieben, die mit Bezug auf die Zeichnung durchgeführt wird, die als keineswegs begrenzendes Beispiel gegeben wird und in der:

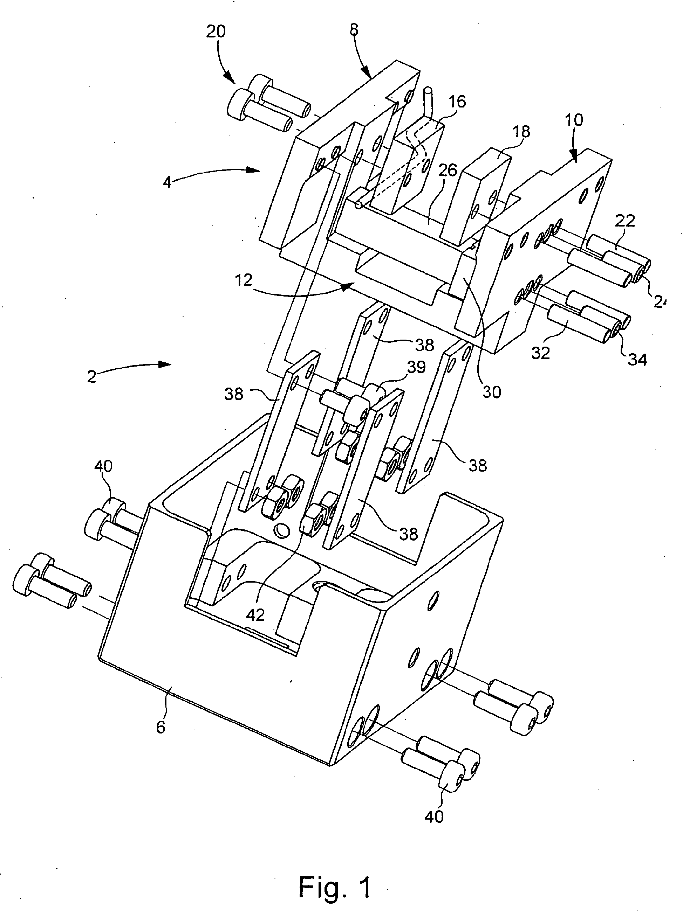

- Fig. 1: eine perspektivische und auseinandergezogene Darstellung einer bevorzugten Ausführungsform der efindungsgemäßen Bremsvorrichtung ist;

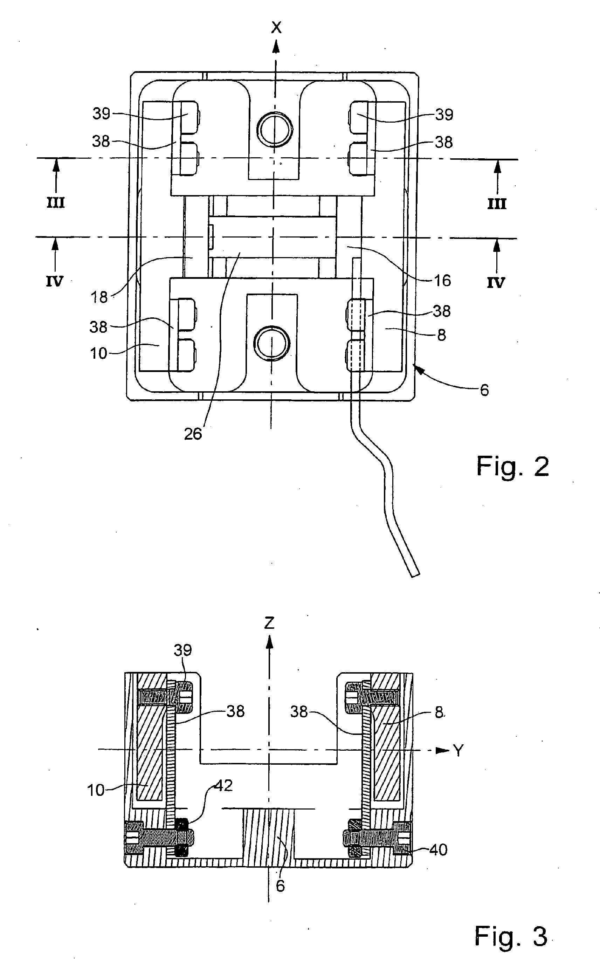

- Fig. 2: eine Draufsicht auf die montierte Vorrichtung von Fig. 1 ist;
- Fig. 3: eine Schnittansicht entlang der Linie III-III von Fig. 2 ist, und
- Fig. 4: eine Schnittansicht entlang der Linie IV-IV von Fig. 2 ist.

Mit Hilfe der Figuren wird nachstehend eine bevorzugte Ausführungsform der erfindungsgemäßen Bremsvorrichtung beschrieben.

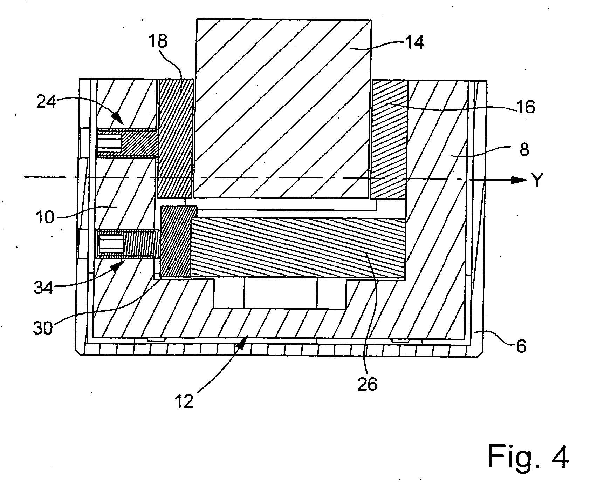

Die Bremsvorrichtung 2 umfasst eine erste Baugruppe 4 und einen Träger 6, der ein Gehäuse bildet. Die Baugruppe 4 umfasst zwei Bremsklötze 8 und 10, die durch das Verbindungselement 12 verbunden sind, das sich quer zu den zwei Bremsklötzen und zur Führungsschiene 14 erstreckt, die in Fig. 4 schematisch dargestellt ist. Die Führungsschiene 14 definiert eine Bremsschiene. Eine Bremsscheibe, die für die Bremsfunktion geeignet ist, kann jedoch vorgesehen sein. In der dargestellten Variante bildet das Verbindungselement 12 ein und dasselbe Stück mit den zwei Bremsklötzen. In anderen Varianten können jedoch die Bremsklötze durch unterschiedliche Elemente, die an den Bremsklötzen befestigt sind, miteinander verbunden sein. Jeder Bremsklotz ist mit einer Bremsscheibe 16 bzw. 18 verbunden. Die Scheibe 16 ist fest vorgesehen und am Bremsklotz 8 mit Hilfe von zwei Schrauben 20 montiert. Die Scheibe 18 ist am Bremsklotz 10 mit Hilfe von zwei Stiften 22 montiert, die in den entsprechenden Löchern des Bremsklotzes 10 beim Ausüben einer bestimmten Kraft auf die Scheibe 18 gleiten können. Um die Position der Scheibe 18 relativ zur Scheibe 16 exakt einzustellen, ist eine Stellschraube 24 vorgesehen.

Die Baugruppe 4 umfasst auch ein piezoelektrisches Element 26, das mit dem Verbindungselement 12 verbunden ist, um Entfernungsmittel für die Bremsklötze 8 und 10 zu bilden. Das piezoelektrische Element 26 ist zwischen den zwei Bremsklötzen angeordnet, wobei sein erstes Ende am Bremsklotz 8 anliegt und sein zweites Ende an einem Blockierungsstück 30 anliegt, das am Bremsklotz 10 in beweglicher Weise mit Hilfe von Stiften 32, die in den entsprechenden Löchern dieses Bremsklotzes 10 gleiten können, montiert ist. Das Blockierungsstück 30 wird mit Hilfe einer Blockierungsschraube 34 am piezoelektrischen Element 26 in Anlage gehalten. Diese Schraube 34 ermöglicht es folglich, einen bestimmten Anfangsdruck auf das piezoelektrische Element 26 auszuüben.

Die hier beschriebene Bremsvorrichtung ist so angeordnet, dass die Bremsschiene 14 bei Abwesenheit von elektrischer Versorgung angezogen wird, wobei die Bremse gelöst wird, wenn das piezoelektrische Element elektrisch versorgt wird. Bei der Versorgung des piezoelektrischen Elements nimmt der Abstand zwischen den zwei Bremsklötzen 8 und 10 bzw. zwischen den Bremsscheiben 16 und 18 zu. Diese Entfernung der Bremsklötze durch das piezoelektrische Element erzeugt Spannungen und eine gewisse Verformung der Basis der zwei Bremsklötze und des Verbindungselements 12, das die Basen dieser zwei Bremsklötze verbindet. Das Verbindungselement 12 ist so bemessen, dass es eine ausreichende Steifigkeit aufweist, um die vorgesehene Bremskraft zu liefern, aber nicht zu hoch ist, um eine bestimmte Biegung unter der Entfernungskraft zu ermöglichen, die vom piezoelektrischen Element 26 ausgeübt wird. Somit ist zu verstehen, dass bei der Aktivierung der Bremsvorrichtung das Verbindungselement 12 eine variable Biegung aufweist. Um zu vermeiden, dass diese Veränderung des Biegezustandes des Verbindungselements 12 auf den Träger der Bremsvorrichtung und auf den beweglichen Teil des Elektromotors, der mit dem Träger 6 fest verbunden ist, übertragen wird, ist gemäß der Erfindung vorgesehen, die Baugruppe 4 am Träger 6 durch entlang der Richtung Y, d. h. quer zur Längsrichtung der Schiene 14, elastisch verformbare Platten 38 zu befestigen. Jede Platte 38 ist an einem ersten Ende an der Baugruppe 4 mittels Schrauben 39 und an ihrem zweiten Ende am Träger 6 ebenfalls mittels Schrauben 40, die mit Muttern 42 verbunden sind befestigt. Es ist zu beachten, dass die elastisch verformbaren Platten 38 am Träger 6 und an der Baugruppe 4 durch jegliches dem Fachmann bekannte Mittel befestigt werden können.

Gemäß einem besonderen Merkmal der Erfindung weisen die Platten 38 eine gewisse Elastizität entlang der Y-Richtung, d. h. entlang der Längsrichtung des piezoelektrischen Elements 26 auf, entlang der die Entfernungskraft der Bremsklötze ausgeübt wird. Dagegen sind diese Platten 38 entlang der X-Richtung, die der Längsrichtung der Bremsschiene 14 entspricht, starr und folglich quasi nicht verformbar.

Hier ist zu beachten, dass andere Entfernungsmittel der Bremsklötze 8 und 10 vorgesehen werden können, insbesondere elektrische, hydraulische oder pneumatische Mittel. Die hier beschriebene Variante mit piezoelektrischen Mitteln ist jedoch bevorzugt. Die piezoelektrische Vorrichtung ist nämlich kompakt, verbraucht wenig und ist hinsichtlich der Temperatur stabil.

Die von der Baugruppe 4 bei der Aktivierung der Bremsvorrichtung erfahrenen Verformungen werden durch die Platten 38 absorbiert, so dass der Träger 6 keinen mechanischen Spannungen ausgesetzt wird, die Verformungen oder Verschiebungen von diesem, insbesondere entlang der Z-Achse, erzeugen.

Der Fachmann kann verschiedene Varianten für die Mittel zur Befestigung der Baugruppe 4, welche die Bremsklötze umfasst, am Träger 6 entwerfen, der mit dem beweglichen Teil des Elektromotors fest verbunden ist, indem diese Befestigungsmittel so angeordnet werden, dass sie entlang mindestens einer zur Bremsschiene 14 quer liegenden Richtung elastisch verformbar sind.

## Patentansprüche

1. Bremsvorrichtung (2) für einen Elektromotor des Typs mit mindestens zwei Bremsklötzen (8, 10), die mit einer Bremsschiene oder Bremsscheibe (14) zusammenwirken, die zwischen diese zwei Bremsklötze eingefügt ist und seitlich durch diese zwei Bremsklötze gedrückt wird, um den beweglichen Teil des Elektromotors zu bremsen, wobei diese zwei Bremsklötze mit Entfernungsmitteln (26, 12) verbunden sind, die es ermöglichen, den Abstand zwischen den zwei Bremsklötzen zu verändern, um die Bremsvorrichtung zu aktivieren oder zu deaktivieren, **dadurch gekennzeichnet, dass** die Baugruppe (4), die aus den zwei Bremsklötzen und den Entfernungsmitteln gebildet ist, an einem Träger (6) dieser Bremsvorrichtung, durch Befestigungsmittel (38) befestigt ist, die relativ zum Träger entlang zumindest einer zur Längsrichtung der Schiene oder Scheibe quer liegenden Richtung elastisch verformbar sind.

2. Bremsvorrichtung nach Anspruch 1, **dadurch gekennzeichnet, dass** die Entfernungsmittel aus einem Verbindungselement (12), das die zwei Bremsklötze (8, 10) verbindet, und einem piezoelektrischen Element (26), das zwischen den zwei Bremsklötzen angeordnet ist, gebildet sind und entlang einer zu den zwei Bremsklötzen quer liegenden Richtung aktiv sind, wobei diese letzteren voneinander entfernt werden, wenn das piezoelektrische Element versorgt wird.

3. Bremsvorrichtung nach Anspruch 1 oder 2, **dadurch gekennzeichnet, dass** die Befestigungsmittel aus Platten (38) gebildet sind, die entlang der zur Längsrichtung der Schiene oder Scheibe und zu den zwei Bremsklötzen quer liegenden Richtung elastisch verformbar, aber entlang der Längsrichtung dieser Schiene oder Scheibe (14) starr sind.

## Claims

1. A brake device (2) for an electric motor of the type comprising at least two brake blocks (8, 10), which interact with a brake rail or a brake disk (14), which is inserted between these two break blocks and which is laterally pressed through these two brake blocks so as to brake the movable part of the electric motor, wherein these two brake blocks are connected to distancing means (26, 12), which make it possible to change the distance between the two brake blocks so as to activate or deactivate the brake device, **characterized in that** the assembly (4), which is formed from the two brake blocks and the distancing means, is fastened to a support (6) of this brake device by means of fastening means (38), which are capable of being elastically deformed relative to the support along at least one direction located at right angles to the longitudinal direction of the rail or disk.

2. The brake device according to claim 1, **characterized in that** the distancing means are formed from a connecting element (12), which connects the two brake blocks (8, 10), and a piezoelectric element (26), which is arranged between the two brake blocks and being active along a direction, which is located at right angles to the two brake blocks, wherein said latter are spaced apart from one another when the piezoelectric element is supplied.

3. The brake device according to claim 1 or 2, **characterized in that** the fastening means are formed from plates (38), which are capable of being elastically deformed along the direction located at right angles along the longitudinal direction of the rail or disk and to the two brake blocks, but fixed along the longitudinal direction of this rail or disk (14).

## Revendications

1. Dispositif de freinage (2) pour un moteur électrique du type, avec au moins deux sabots de frein (8, 10) coopérant avec un rail de freinage ou encore un disque de freinage (14) qui est inséré entre ces deux sabots de frein et pressé latéralement à travers ces deux sabots de frein, afin de freiner la partie mobile du moteur électrique, ces deux sabots de frein étant reliés par des moyens d'espacement (26, 12) permettant de modifier l'écart entre les deux sabots de frein, pour activer ou désactiver le dispositif de freinage, **caractérisé en ce que** le bloc (4) formé par les deux sabots de frein et les moyens d'espacement est fixé à un support (6) de ce dispositif de freinage, grâce à des moyens de fixation (38) élastiquement déformables par rapport au support, le long d'au moins une direction transversale par rapport au sens longitudinal du rail ou du disque.

2. Dispositif de freinage selon la revendication 1, **caractérisé en ce que** les moyens d'espacement sont constitués d'un élément de liaison (12) reliant les deux sabots de frein (8, 10), et d'un élément piézoélectrique (26) disposé entre les deux sabots de frein, tout en étant actifs le long d'une direction transversale par rapport aux deux sabots de frein, ces derniers étant ainsi éloignés l'un de l'autre lorsque l'élément piézoélectrique est alimenté.

3. Dispositif de freinage selon la revendication 1 ou 2, **caractérisé en ce que** les moyens de fixation sont formés par des plaques (38) qui sont élastiquement déformables le long de la direction s'étendant transversalement par rapport aux deux sabots de frein et au sens longitudinal du rail ou du disque, mais fixes le long du sens longitudinal de ce rail ou disque (14).
